Europäisches Patentamt

European Patent Office

Office européen des brevets

(19)

(11) Veröffentlichungsnummer: **0 003 829**

**A1**

(12)

# EUROPÄISCHE PATENTANMELDUNG

(21) Anmeldenummer: 79100505.1

(22) Anmeldetag: 21.02.79

(51) Int. Cl.²: **B 01 D 13/04**
**B 29 D 7/00, C 08 J 5/22**

(30) Priorität: 25.02.78 DE 2808222

(43) Veröffentlichungstag der Anmeldung:
05.09.79 Patentblatt 79/18

(84) Benannte Vertragsstaaten:
BE CH FR GB IT NL SE

(71) Anmelder: Battelle-Institut e.V.
Am Römerhof 35
D-6000 Frankfurt/Main 90(DE)

(72) Erfinder: Klimmek, Albrecht
Neuhausstrasse 2
6370 Oberursel(DE)

(72) Erfinder: Krieger, Wolfram, Dr.
Falkstrasse 91
D-6000 Frankfurt/Main(DE)

(72) Erfinder: Reiner, Roland, Dr.
Gehspitz 11
D-6236 Eschborn(DE)

(74) Vertreter: Blum, Klaus-Dieter, Dipl.-Ing.
Am Römerhof 35
D-6000 Frankfurt/Main 90(DE)

(54) Verfahren zur Herstellung von Composite-Membranen.

(57) Zur Herstellung von aus einer porösen Stützmembran und einer dünnen Trennmembran bestehenden Composite-Membranen wird zunächst auf einem löslichen Trägerfilm die Trennmembran hergestellt. Der Trägerfilm wird sodann mit der Trennmembran beschichteten Seite auf die Stützmembran aufgelegt und anschliessend in einem geeigneten Lösungsmittel aufgelöst.

EP 0 003 829 A1

Croydon Printing Company Ltd.

0003829

589-36/16/77

CASCH/SUK

14. Februar 1979

BATTELLE - INSTITUT E.V., Frankfurt (Main)


============================

Verfahren zur Herstellung

von Composite-Membranen

============================


Die Erfindung betrifft ein Verfahren zur Herstellung von Composite-Membranen, die aus einer porösen Stützmembran und einer dünnen Trennmembran bestehen.

Selektiv durchlässige Membranen aus unterschiedlichen Polymeren werden bei der Hyperfiltration, d.h. bei der reversen Osmose eingesetzt, für Meer- und Brackwasserentsalzung, zur Abwasserreinigung und zur Rückgewinnung von wertvollen Stoffen aus Abwässern. Die Wirtschaftlichkeit dieser Methode hängt von

- 2 -

der Leistungsfähigkeit der Membran ab, wobei der Wasserfluß durch den Arbeitsdruck und die Membrandicke bestimmt wird. Man ist bestrebt, möglichst dünne Membranen von 0,1 bis 1 μm herzustellen, da der Wasserfluß bei geringer Membrandicke größer ist.

Als Membranen mit extrem dünner Trennschicht von weniger als 1 μm werden entweder asymmetrische Membranen oder Composite-Membranen verwendet. Asymmetrische Membranen, die durch Fällungsreaktionen hergestellt werden, besitzen eine dünne, dichte Trennschicht, die die eigentliche Membran darstellt, und einen porösen Unterbau. Die Trennschicht und der Unterbau bestehen aus einem chemisch einheitlichen Material.

Die bekannten Composite-Membranen bestehen aus einer porösen Stützmembran, auf die die eigentliche Trennmembran aufgebracht wird. Die Stützmembran und die Trennmembran können dabei aus unterschiedlichen Materialien bestehen. Die Composite-Membranen werden entweder durch Grenzflächenpolymerisation der die Trennmembran bildenden Komponenten auf der Stützmembran oder durch Aufbringen einer Polymerlösung auf die Stützmembran mit anschließender Verdampfung des Lösungsmittels hergestellt.

Bei der Grenzflächenpolymerisation wird die Stützmembran nacheinander mit Lösungen der Reaktionskomponenten, die die Trennmembran bilden, in Kontakt gebracht. Da die Lösungsmittel miteinander nicht mischbar sind, entsteht durch die Reaktion an der Grenzschicht der Lösungsmittel ein dünner Polymerfilm, der

- 8 -

eine weitere Reaktion der beiden Komponenten verhindert.
Dieses Verfahren ist jedoch nur auf wenige Arten von Polymersynthesen anwendbar und die benötigten Lösungsmittel greifen
oft das Material, aus dem die Stützmembran besteht, an und
zerstören dessen Struktur.

Das Verfahren, bei dem die Trennmembran durch Aufbringen
einer Polymerlösung auf die Stützmembran und Verdampfen des
Lösungsmittels gebildet wird, erfordert die Verwendung einer
stark verdünnten Polymerlösung. Nach dem Verdampfen des
Lösungsmittels erhält man eine homogene zusammenhängende
Polymerschicht, deren Dicke von der Polymerkonzentration
abhängt. Bei diesem Verfahren ist es wesentlich, daß die
Gießlösung nicht in die Poren der Trägermembran eindringt und
diese verstopft. Um die Porenverstopfung bzw. den Angriff auf
die Stützmembran zu verhindern, wird auf der porösen Stützmembran häufig eine Sperrschicht aufgebracht, die aus einem
später herauslösbaren Material besteht, und anschließend wird
mit der Gießlösung beschichtet. Wenn die Stützmembran nicht
in dieser Weise maskiert wird, können nur solche Lösungsmittel
verwendet werden, die das Material der Stützmembran nicht angreifen. Die leistungsfähigen Materialien für die Herstellung
der Trennmembran sind jedoch nur in solchen Lösungsmitteln
löslich, die die heute verfügbaren Stützmembranen aus Polysulfon,
Celluloseacetat und dergleichen zerstören. Außerdem kann die
Gießlösung in die Poren der Stützmembran eindringen und somit
kann die Bildung einer dünnen, dichten Trennmembran verhindert
werden.

Bei der Herstellung von Composite-Membranen mit vorheriger Maskierung der Stützmembran könen zwar dünne, gleichmäßige Trennmembranschichten hergestellt werden, jedoch macht die vollständige Entfernung der Maskierungsschicht oft erhebliche Schwierigkeiten und das Maskierungsmaterial verunreinigt beim ersten Einsatz der so hergestellten Composite-Membranen das Permeat (z.B. FR-PS 2 322 637).

Nach einem bekannten Verfahren werden asymmetrische Ultrafiltrationsmembranen auf einem Formteil aus Silikonkautschuk hergestellt (DE-OS 21 32 325). Ein Verbund aus der Trennmembran und dem Träger wird dabei nicht erzielt. Die Entfernung des Formteils erfolgt mechanisch.

Ferner ist ein Verfahren bekannt, bei dem eine Polymerlösung auf einem Träger aufgebracht und anschließend eine Komponente des Trägermaterials herausgelöst wird, so daß eine poröse Stützstruktur entsteht (GB-PS 1 207 197). Dabei darf der Träger nur Materialien enthalten, aus denen die Trennschicht nicht besteht.

Zum Schutz der empfindlichen Membranoberfläche wurde bereits vorgeschlagen, nach der Bildung des Membrans die Oberfläche mit einem wasserlöslichen Film zu versehen (FR-PS 2 324 376). Dieses Verfahren kann jedoch nur mit bestimmten Polymerisaten durchgeführt werden und der lösliche Polymerfilm dient bei der Herstellung der Trennschicht nicht als ein Träger.

Die Aufgabe der vorliegenden Erfindung ist ein Verfahren zur Herstellung von Composite-Membranen zu entwickeln, bei dem die vorgenannten Nachteile vermieden werden.

Es hat sich nun gezeigt, daß sich diese Aufgabe in technisch fortschrittlicher Weise lösen läßt, wenn gemäß vorliegender Erfindung man auf einer Oberfläche eines Trägerfilms, der aus einem löslichen Polymeren besteht, die Trennmembran herstellt, danach den mit der Trennmembran beschichteten Trägerfilm mit der Trennmembranseite auf eine poröse Stützmembran so auflegt, daß die Trennmembran sich zwischen der Stützmembran und dem Trägerfilm befindet und den Trägerfilm sodann auflöst. Die vorteilhaften Weiterbildungen des erfindungsgemäßen Verfahrens sind in den Unteransprüchen 2 bis 7 erläutert.

Das erfindungsgemäße Verfahren ist zur Herstellung von dünnen, leistungsfähigen Composite-Membranen aus allen Polymergießlösungen geeignet. Als Einsatzkriterium für das Material des löslichen Trägerfilms ist nur sein Verhalten im Lösungsmittel des eigentlichen Trennmembranmaterials entscheidend.

Der Trägerfilm besteht vorzugsweise aus einem wasserlöslichen Material. Bei Trennoperationen in z.B. organischen Lösungsmitteln, können zur Herstellung des Trägerfilms aber auch solche Polymeren herangezogen werden, die in den im speziellen Falle in Frage kommenden Medien löslich sind. Vorzugsweise Polymere mit filmbildenden Eigenschaften, z.B. Polyvinylalkohol, teilweise acetylierter Polyvinylalkohol, Polyacrylsäure, Polymethacrylsäure, Alginsäure, Polyvinylpyrroli-

don, Polyacrylamid sowie deren Copolymere. Natriumcarboxymethylcellulose, Methylcellulose. Äthylcellulose sowie Salze aller vorgenannten Säuren, vorzugsweise mit mehrwertigen Metallkationen, können als wasserlösliche Materialien verwendet werden. Bei Trennoperationen in organischen Lösungsmitteln besteht der Trägerfilm aus Polymerisaten mit filmbildenden Eigenschaften, welche im Lösungsmittel des Trennmembranmaterials unlöslich sind, z.B. Celluloseacetat, Polyvinylacetat (in Aceton löslich), Cellulosenitrat (in Aceton/ Wasser löslich) und Cellulose (in Schweizer Reagenz löslich).

Vorzugsweise enthält der Trägerfilm bis zu 50 Gew.-% vorzugsweise 10 bis 20 Gew.-%, bezogen auf das Gewicht des Polymerisates, eines Weichmachers. Als Weichmacher für Polyvinylalkohol können z.B. Glycerin, Polyäthylenglycol oder Sorbit verwendet werden.

In einer weiteren vorteilhaften Ausführungsform des erfindungsgemäßen Verfahrens wird ein Netzmittel eingesetzt, welches die Benetzung des löslichen Trägerfilms durch die zur Herstellung der Trennmembran dienenden Polymerlösung verbessert. Dadurch werden dichtere und dünnere Trennmembranschichten erzielt. Das Netzmittel wird auf die Oberfläche des Trägerfilms aufgebracht und anschließend darauf die Trennmembran- Schicht hergestellt. Bei einer vorteilhaften Ausführungsform wird das Netzmittel der Trennmembran und/oder dem Trägerfilm bei ihrer Herstellung einverleibt, d.h. es wird den Lösungen der Polymeren für Trennmembran bzw. Trägerfilm zugemischt.

- 7 -

Als Netzmittel sind z.B. fluorierte und nichtfluorierte nicht-ionische Detergentien geeignet.

Durch das erfindungsgemäße Verfahren werden Composite-Membranen hergestellt, die sich insbesondere zur Herstellung von Wickel-Moduln eignen. Die Anordnung, daß die Trennmembran sich zwischen der Stützmembran und dem Trägerfilm befindet, hat außerdem den Vorteil, daß die dünne, mechanisch wenig stabile Trennmembran bis zum Beginn der Trennoperation im Modul durch den Trägerfilm gegen mechanische Beschädigung geschützt bleibt. Dieser Schutz ist insbesondere bei Herstellung von Wickel-Moduln von Bedeutung, da dadurch die Membran keinen direkten Kontakt mit den Abstandhaltern hat. Beim Betreiben des Moduls wird dann der lösliche Trägerfilm von Wasser, der Rohlösung oder einem geeigneten Lösungsmittel abgewaschen, so daß dann die Trennmembran in funktionsbereitem Zustand ist.

In den nachfolgenden Beispielen wird das erfindungsgemäße Verfahren näher erläutert:

Beispiel 1

Es wird ein Polyvinylalkoholfilm hergestellt, indem eine 15 %ige Lösung in Wasser mit einer 200 µm-Rakel auf einer polierten Glasplatte ausgezogen und zwei Stunden bei 50 °C im Vakuum getrocknet wird. Dieser ca. 30 µm dicke Träger-film wird mit einer 5 %igen Polyamidlösung (Poly-3-Methoxy-isophtal 4,6 Dimethoxy-m-phenylendiamid) in N.N-Dimethyl-

acetamid übergossen, 30 s ablaufen lassen und anschließend im Vakuum getrocknet. Dananch wird der beschichtete Trägerfilm mit der Polyamidseite auf eine poröse Stützmembran (asymmetrische Ultrafiltrationsmembran; Polysulfon, mittlerer Porendurchmesser auf der trennaktiven Seite ca. 10 nm) aufgelegt und in einer Durchflußtestkammer einem Hyperfiltrationsexperiment unterworfen.

Testbedingungen:    3,5 %ige Kochsalzlösung

100 bar Arbeitsdruck

25 °C

Salzrückhaltevermögen:    95,3 %

Wasserfluß:    52,4 $1/m^2 d$

Trennmembrandicke:    0,85 /um

Beispiel 2

Ein Polyvinylalkoholfilm, weichgemacht mit 20 % Glycerin, wird wie im Beispiel 1 beschrieben mit einer 4 %igen Polyamidlösung behandelt.

Bei Testbedingungen gemäß Beispiel 1 wird ein Salzrückhaltevermögen von 97,8 % und ein Wasserfluß von 39,0 $1/m^2 d$ ermittelt. Die Dicke der Trennmembran beträgt 0,50 /um.

Beispiel 3

Ein Polyvinylalkoholfilm, weichgemacht mit 10 % Polyäthylenglycol 800, wird nach dem Verfahren des Beispiels 1 zweimal mit einer 0,75 %igen Polyamidlösung in Dimethylacetamid behandelt.

Das Hyperfiltrationsexperiment gemäß Beispiel 1 bringt ein Salzrückhaltevermögen von 95,0 % und einen Wasserfluß von 170 l/m²d. Die Dicke der Trennmembran beträgt 0,25 /um.

Beispiel 4

Ein 50 /um dicker Film aus Natriumcarboxymethylcellulose, weichgemacht mit 15 % Glycerin, wird zweimal, wie im Beispiel 1 beschrieben, mit einer 1,5 %igen Polyamidlösung behandelt.

Das Hyperfiltrationsexperiment gemäß Beispiel 1 bringt ein Salzrückhaltevermögen von 92,2 % und einen Wasserfluß von 62,7 l/m²d. Die Dicke der Trennmembran beträgt 0,72 /um.

Beispiel 5

Nach dem Verfahren des Beispiels 4 wird eine Composite-Membran unter Verwendung einer porösen Stützmembran (asymmetrische Ultrafiltrationsmembran) aus Polyacrylnitril mit einem mittleren Porendurchmesser von 10 nm sowie unter Verwendung einer porösen Trägermembran (Ultrafiltrationsmembran) aus Cellulose-2.5-Acetat mit einem mittleren Porendurchmesser von 10 nm hergestellt.

Die Hyperfiltrationsexperimente bringen die gleichen Ergebnisse wie in Beispiel 4 mit einer Toleranz von ± 5 % des Wasserflusses.

Beispiel 6

Ein ca. 30 /um dicker Film, bestehend aus 67 % Polyvinylalkohol und 33 % Natriumcarboxymethylcellulose, weichgemacht mit 11 % Polyäthylenglycol 800, wird gemäß Beispiel 1 zweimal mit 0,75 %iger Polyamidlösung in DMAc behandelt.

Das Hyperfiltrationsexperiment gemäß Beispiel 1 bringt ein Salzrückhaltevermögen von 89,8 % und einen Wasserfluß von 51,2 $1/m^2d$. Die Dicke der Trennmembran beträgt 0,84 /um.

Beispiel 7

Ein Polyvinylalkohol gemäß Beispiel 5 wird viermal gemäß Beispiel 1 mit einer 1 %igen Polyamidlösung (Poly-5-Methoxy-iso-phthal 4,6 Dimethoxy-m-phenylendiamid) in NN-Dimethylacetamid, der als Netzmittel 0,2 %, bezogen auf Polymer, eines nichtionischen fluorierten Netzmittels zugesetzt wird, behandelt.

Das Hyperfiltrationsexperiment gemäß Beispiel 1 bringt ein Salzrückhaltevermögen von 98,5 % und einen Wasserfluß von 123,4 $1/m^2d$. Die Dicke der Trennmembran beträgt 0,54 /um.

Beispiel 8

Ein Polyvinylalkoholfilm gemäß Beispiel 5 wird zweimal gemäß Beispiel 1 mit einer 0,2 %igen Cellulosetriacetatlösung in Chloroform behandelt.

Das Hyperfiltrationsexperiment gemäß Beispiel 1 bringt ein

Salzrückhaltevermögen von 99,5 % und einen Wasserfluß von 115,2 l/m²d. Die Dicke der Trennmembran beträgt 0,59 /um.

Beispiel 9

Ein Polyvinylalkoholfilm gemäß Beispiel 3 wird zweimal gemäß Beispiel 1 mit einer 0,5 %igen Polyamidlösung (Poly-1,5-cyclooctadien-1,2,5,6 tetracarbonsäure-4,6 Dimethoxy-m-phenylen-diimid) in m-Kresol behandelt.

Das Hyperfiltrationsergebnis gemäß Beispiel 1 bringt ein Salzrückhaltevermögen von 80,7 % und einen Wasserfluß von 101,5 l/m²d. Die Dicke der Trennmembran beträgt 0,68 /um.

Beispiel 10

Ein Polyvinylalkoholfilm gemäß Beispiel 3 wird zweimal gemäß Beispiel 1 mit einer 0,5 %igen Lösung eines Copolymeren aus Acrylnitril und Vinylsulfonsäure (Verhältnis 6:1) in N-Methylpyrrolidon behandelt.

Das Hyperfiltrationsexperiment mit einer Lösung, die 5 % Silbernitrat und 5 % Kupfernitrat mit Kristallwasser enthält, bringt bei einem Arbeitsdruck von 60 bar bei 25 °C folgende Ergebnisse:

Rückhaltevermögen $AgNO_3$ : - 54.8 % (Anreicherung im Permeat
Rückhaltevermögen $Cu(NO_3)_2 \cdot 3 H_2O$: 95,8 %
Wasserfluß: 40,5 l/m²d
Trennmembrandicke: 0,49 /um.

589-36/16/77

CASCH/SUK

14. Februar 1979

Patentansprüche

1. Verfahren zur Herstellung von Composite-Membranen, die aus einer porösen Stützmembran und einer dünnen Trennmembran bestehen, dadurch gekennzeichnet, daß man auf einer Oberfläche eines Trägerfilms, der aus einem löslichen Polymeren besteht, die Trennmembran herstellt, den mit der Trennmembran beschichteten Trägerfilm mit der Trennmembranseite auf eine poröse Stützmembran so auflegt, daß die Trennmembran sich zwischen der Stützmembran und dem Trägerfilm befindet und den Trägerfilm sodann auflöst.

2. Verfahren nach Anspruch 1, dadurch gekennzeichnet, daß der Trägerfilm aus Polyvinylalkohol, teilweise acetyliertem Polyvinylalkohol, Polyacrylsäure bzw. ihre Salze, Polymethacrylsäure bzw. ihre Salze, Polyvinylpyrrolidon, Polyacrylamid, Polyvinylacetat sowie deren Copolymere, Alginsäure bzw. ihre Salze, Carboxymethylcellulose, Methylcellulose, Äthylcellulose, Celluloseacetat, Cellulose, Polycarbonat und Mischungen derselben besteht.

3. Verfahren nach Anspruch 1, dadurch gekennzeichnet, daß ein Trägerfilm verwendet wird, der aus einem wasserlöslichen Polymeren besteht.

4. Verfahren nach Anspruch 2 und 3, dadurch gekennzeichnet, daß ein Trägerfilm verwendet wird, der 5 bis 100 $\mu$m, vorzugsweise 20 bis 50 $\mu$m dick ist.

5. Verfahren nach Anspruch 1 bis 4, dadurch gekennzeichnet, daß der Trägerfilm bis zu 50 Gew.-%, vorzugsweise 10 bis 20 Gew.-%, bezogen auf das Gewicht des Polymerisates, eines Weichmachers enthält.

6. Verfahren nach Anspruch 5, dadurch gekennzeichnet, daß als Weichmacher für Polyvinylalkohol Glycerin, Polyäthylglycol oder Sorbit verwendet werden.

7. Verfahren nach Anspruch 1, dadurch gekennzeichnet, daß dem Trägerfilm oder der Trennmembran ein nichtionisches Netzmittel zugesetzt wird.

0003829

**Europäisches Patentamt**

**EUROPÄISCHER RECHERCHENBERICHT**

Nummer der Anmeldung

**EP 79 10 0505**

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>US - A - 3 96 452</u> (D.F. CILIBERTI) <br> * Ansprüche 1,2,13,19; Spalte 1, Zeilen 41-61; Spalte 3, Zeilen 30-33; Spalte 4, Zeile 62 - Spalte 5, Zeile 4 * <br><br> -- <br><br> <u>FR - A - 2 202 123</u> (BAYER AG) <br> * Ansprüche 1,7; Seite 1, Zeilen 1-5; Seite 1, Zeile 37 - Seite 2, Zeile 6; Seite 2, Zeilen 30-36 * <br><br> -- <br><br> <u>GB - A - 1 256 491</u> (U.K. ATOMIC ENERGY AUTHORITY) <br> * Ansprüche 1,5,6,15; Seite 2, Zeilen 41-72 * <br><br> -- | 1-5,7 <br><br><br><br><br><br><br> 1,3 <br><br><br><br><br><br><br> 1-3 | B 01 D 13/04 <br> B 29 D 7/00 <br> C 08 J 5/22 <br><br><br><br><br><br><br><br><br> RECHERCHIERTE SACHGEBIETE (Int. Cl.²) <br><br> B 01 D 13/04 <br> B 29 D 7/00 |
| D | <u>FR - A - 2 324 338</u> (VOP INC.) <br> * Ansprüche 9,10,15; Seite 8, Zeilen 10-32; Seite 9, Zeilen 19-26 * <br><br> -- <br><br> RESEARCH DISCLOSURE, Dezember 1972, Nr. 104, C.L. STRICKER: "Coated porous supports for solution-cast membranes", Seite 23 <br> * Vollständig * <br><br> -- | 1-3 <br><br><br><br><br> 7 | |
| DA | <u>FR - A - 2 322 637</u> (CONSIGLIO NAZIONALE DELLE RICERCHE) <br><br> ---- | | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 22-05-1979 | HOORNAERT |

EPA form 1503.1 06.78